# EUROPÄISCHE PATENTANMELDUNG

(11) **EP 4 624 244 A1**
(43) Veröffentlichungstag der Anmeldung: **01.10.2025**
(21) Anmeldenummer: 24165838.4
(22) Anmeldetag: 25.03.2024
(51) Int. Cl.: B60N 2/16

(54) **FAHRZEUGSITZ MIT EINER HÖHENEINSTELLKINEMATIK**

(71) Anmelder: Adient US LLC, Plymouth, MI 48170 (US)
(72) Erfinder: KAUFHOLD-HAFFNER, Christian, 67661 Kaiserslautern (DE); WOLF, Christian, 67811 Dielkirchen (DE); DILL, Thomas, 67699 Heiligenmoschel (DE)
(74) Vertreter: Liedtke & Partner Patentanwälte

(57) **Zusammenfassung**

Die Erfindung betrifft einen Fahrzeugsitz (100), umfassend zumindest einen Sitzrahmen (130) mit zumindest zwei in Querrichtung (y) zueinander beabstandet angeordneten Sitzrahmenseitenteilen (132), und eine Höheneinstellkinematik (120), die beidseitig jeweils über zumindest ein erstes Drehgelenk (I) schwenkbar am Sitzrahmen (130) angelenkt ist, wobei die Sitzrahmenseitenteile (132) über eine in Vertikalrichtung (z) oberhalb der ersten Drehgelenke (I) angeordnete Querstange (140) miteinander verbunden sind.

## Beschreibung

Die Erfindung betrifft einen Fahrzeugsitz mit zumindest einem Sitzrahmen und einer Höheneinstellkinematik.

### Stand der Technik

Die DE 100 42 851 A1 offenbart ein höhenverstellbares Untergestell eines Kraftfahrzeugsitzes mit einem linken und einem rechten Schienenpaar einer Längsverstellvorrichtung und mit einem linken und mit einem rechten Seitenteil, die jeweils über eine hintere und eine vordere Schwinge mit der zugehörigen Sitzschiene des Schienenpaars gelenkverbunden sind, wobei ein Einstellarm vorgesehen ist, der mit einem unteren Endbereich an einem Gelenkpunkt einer hinteren Schwinge an der zugehörigen Sitzschiene angelenkt ist und der in Nähe seines oberen Endes in einer Arretiervorrichtung lösbar festgelegt ist, die am zugehörigen Seitenteil befestigt ist.

### Aufgabe

Der Erfindung liegt die Aufgabe zu Grunde, einen Fahrzeugsitz der eingangs genannten Art zu verbessern, insbesondere um einen Insassenkomfort zu erhöhen.

### Lösung

Diese Aufgabe wird erfindungsgemäß gelöst durch einen Fahrzeugsitz, welcher zumindest einen Sitzrahmen mit zumindest zwei in Querrichtung zueinander beabstandet angeordneten Sitzrahmenseitenteilen und eine Höheneinstellkinematik, die beidseitig jeweils über zumindest ein erstes Drehgelenk schwenkbar am Sitzrahmen angelenkt ist, wobei die Sitzrahmenseitenteile über eine in Vertikalrichtung oberhalb der ersten Drehgelenke angeordnete Querstange miteinander verbunden sind.

Dadurch, dass die Sitzrahmenseitenteile über eine in Vertikalrichtung oberhalb der ersten Drehgelenke angeordnete Querstange miteinander verbunden sind, kann ein Aufnahmeraum unterhalb des Fahrzeugsitzes vergrößert werden. Insbesondere kann dadurch ein Insassenkomfort für einen hinter dem erfindungsgemäßen Fahrzeugsitz sitzenden Insassen erhöht werden.

Herkömmlicherweise weist eine Höheneinstellkinematik hintere Schwingen auf, die über eine gemeinsame Querstange an beiden Sitzrahmenseitenteilen angelenkt sind. Eine Fußraumgrenze für einen hinter dem Fahrzeugsitz sitzenden Insassen, beispielsweise einen Fondpassagier, ist in der Regel durch die hintere Querstange vorgegeben.

Dadurch, dass die Querstange des erfindungsgemäßen Fahrzeugsitzes in Bezug auf eine Position der Drehgelenke, welche die Höheneinstellkinematik mit dem Sitzrahmen verbinden, angehoben ist, kann ein darunter vorgesehener Aufnahmeraum, beispielsweise ein Fußraum, vergrößert werden. Beispielsweise ist die Querstange in Bezug auf die Position der Drehgelenke in einer "nach oben verschobenen" Position mit dem Sitzrahmen verbunden. Dabei kann eine torsionssteife Verbindung zwischen Querstange und Anlenkung der Drehgelenke entfallen. Eine Verbindung zwischen der Querstange und der Anlenkung der Drehgelenke ist durch das jeweilige Sitzrahmenseitenteil, beispielsweise einen Polsterrahmenseitenträger, realisiert.

Eine torsionssteife Verbindung zwischen den hinteren Schwingen ist zur Crashsicherheit notwendig. Zudem wird durch die torsionssteife Verbindung ein "Wackeln" des Sitzrahmens bei Belastung durch einen Nutzer vermieden.

Herkömmlicherweise gibt es eine direkte torsionssteife Verbindung der beiden hinteren Schwingen durch die Querstange, die die beiden Schwingen direkt verbindet, dadurch aber den Fußraum des dahinter Sitzenden einschränkt.

Gemäß einem Ausführungsbeispiel kann zusätzlich eine Verzahnung zwischen zumindest einer der Schwingen und der Querstange, beispielsweise auf einer gegenüberliegenden Seite des Höheneinstellers, vorgesehen sein, um eine torsionssteife Verbindung zwischen den hinteren Schwingen zu realisieren.

Gemäß einem weiteren Ausführungsbeispiel kann beidseitig der Querstange jeweils eine zusätzliche Verzahnung vorgesehen sein.

Gemäß einem Ausführungsbeispiel können die Schwingen über eine Querstange miteinander verbunden sein. Für eine formschlüssige und torsionssteife Verbindung kann die jeweilige Schwinge eine Öffnung zur Aufnahme beziehungsweise Durchführung der Querstange aufweisen, wobei die jeweilige Öffnung mit einer Verzahnungsgeometrie versehen sein kann. Dadurch kann eine zusätzliche Verbindung der Querstange mit der jeweiligen Schwinge durch ihre komplementären Verzahnungsgeometrien realisiert werden. Dabei kann eine Außenumfangsseite der Querstange mit einem Verriegelungselement, beispielsweise einer Verzahnung, versehen sein und die Öffnung der Schwinge mit einem korrespondierenden Verriegelungselement, beispielsweise einer Verzahnung, versehen sein.

Mit anderen Worten: Mittels der nach oben versetzten Querstange zur Verbindung der Sitzrahmenseitenteile kann eine die Drehgelenke herkömmlicherweise verbindende Querstange entfallen. Die ersten Drehgelenke können koaxial zueinander ausgerichtet sein und eine gedachte Drehachse definieren.

Ein vergrößerter Aufnahmeraum kann mehr Stauraumvolumen zum Verstauen von Gegenständen unterhalb des Fahrzeugsitzes und zusätzlich mehr Platz für Fußfreiheit und Beinfreiheit bieten. Dadurch kann ein Insassenkomfort gesteigert werden.

Vorteilhafte Ausgestaltungen, welche einzeln oder in Kombination miteinander eingesetzt werden können, sind Gegenstand der Unteransprüche.

Eine durch die Querstange verlaufende Querstangenachse und eine erste Drehachse der ersten Drehgelenke können parallel zueinander verlaufend angeordnet sein. Alternativ kann die Querstangenachse zu der Drehachse parallel versetzt angeordnet sein.

Die Querstange kann beidseitig mit jeweils einem der beiden Sitzrahmenseitenteile fest verbunden sein. Zum Beispiel kann die Querstange beidseitig mit dem entsprechenden Sitzrahmenseitenteil zumindest stoffschlüssig, formschlüssig und/oder kraftschlüssig verbunden sein. Die Querstange dient zur Erhöhung einer Robustheit und Steifigkeit des Sitzrahmens sowie zur Kraftübertragung, beispielsweise von während eines Fahrbetriebs erzeugbaren Erschütterungen und/oder in Crashsituationen, beispielsweise Aufprallsituationen.

Zumindest eine Verriegelungsvorrichtung kann an einem der beiden Sitzrahmenseitenteile angeordnet und ausgebildet sein, um die Querstange zumindest einseitig mit einem der beiden ersten Drehgelenke des entsprechenden Sitzrahmenseitenteils torsionssteif zu verbinden.

Dadurch, dass eine zusätzliche Verriegelungsvorrichtung vorgesehen ist, kann eine torsionssteife Verbindung zwischen der Querstange und dem Drehgelenk zur Erhöhung einer Insassensicherheit im Crashfall sichergestellt werden.

Die Verriegelungsvorrichtung kann zumindest zwei in Eingriff bringbare oder gebrachte Verriegelungselemente aufweisen, wobei ein erstes Verriegelungselement mit der Querstange verbunden sein kann und ein zweites Verriegelungselement mit dem ersten Drehgelenk verbunden sein kann.

Das erste Verriegelungselement kann beispielsweise als ein Halteelement mit einem Verriegelungssegment ausgebildet sein. Das erste Verriegelungselement kann beispielsweise ein im Wesentlichen ringförmig ausgebildetes Halteblech sein und eine Öffnung zur Aufnahme und/oder Durchführung der Querstange aufweisen.

Zwischen dem Verriegelungselement und der Querstange besteht eine formschlüssige (torsionssteife) Verbindung. Die formschlüssige Verbindung entsteht beispielsweise durch die Montage zwischen Verriegelungselement und Querstange. Eine Innenkontur der Öffnung des Verriegelungselements kann eine Verzahnung aufweisen, die mit einer Außenkontur der Querstange in Formschluss, beispielsweise Eingriff, gelangen kann.

Die Verriegelungselemente können als in Verzahnung bringbare oder gebrachte Zahnsegmente ausgebildet sein. Zum Beispiel kann das erste Verriegelungselement als ein Halteelement mit einem Zahnsegment ausgebildet sein.

Das zweite Verriegelungselement kann mit dem Drehgelenk, beispielsweise einem Lagerelement, integral ausgebildet sein. Zum Beispiel kann das Drehgelenk ein Zahnsegment aufweisen. Alternativ kann das zweite Verriegelungselement mit einer hinteren Schwinge integral ausgebildet sein. Zum Beispiel kann eine hintere Schwinge der Höheneinstellkinematik ein Zahnsegment aufweisen.

Das erste Verriegelungselement kann an einem unterseitigen Stangensegment der Querstange angeordnet sein. Das erste Verriegelungselement kann an der Querstange angebracht sein. Das erste Verriegelungselement kann als separates Bauteil mit der Querstange verbunden sein und an einer Unterseite ein Zahnsegment aufweisen. Das Zahnsegment kann entlang des Stangensegments der Querstange verlaufen. Das Zahnsegment kann beispielsweise in Form eines Kreissegments ausgebildet sein.

Das zweite Verriegelungselement kann an einem oberseitigen Gelenksegment des ersten Drehgelenks und/oder an einem oberseitigen Schwingensegment einer hinteren Schwinge der Höheneinstellkinematik angeordnet sein. Das Verriegelungselement kann in Form eines Kreissegments ausgebildet sein. Das Verriegelungselement kann mit dem oberseitigen Schwingensegment integral ausgebildet sein. Die hintere Schwinge kann also ein verzahntes Schwingensegment aufweisen.

Die Höheneinstellkinematik kann beidseitig des Sitzrahmens jeweils eine Viergelenkanordnung aufweisen, wobei jede der beiden Viergelenkanordnungen jeweils eine Basis, ein Sitzrahmenseitenteil, eine vordere Schwinge und eine hintere Schwinge als Getriebeglieder umfassen kann.

Die hintere Schwinge kann über das erste Drehgelenk schwenkbar an dem Sitzrahmenseitenteil und über ein zweites Drehgelenk schwenkbar an der Basis angelenkt sein.

Die vordere Schwinge kann über ein drittes Drehgelenk schwenkbar an dem Sitzrahmenseitenteil und über ein viertes Drehgelenk schwenkbar an der Basis angelenkt sein.

Die Sitzrahmenseitenteile können jeweils aus mehreren Blechteilen zusammengesetzt sein, die miteinander verbunden, beispielsweise verschweißt, sein können. Alternativ können jedoch auch beidseitig jeweils einteilige Sitzrahmenseitenteile verwendet werden.

Ein Federelement kann vorgesehen und ausgebildet sein, die Querstange und eines der beiden ersten Drehgelenke zueinander zu verspannen. Das Federelement kann eine Torsionsfeder sein. Das Federelement kann eingebaut werden, um ein Klappern zwischen den Teilen zu vermeiden.

Zumindest eine Antriebseinheit zur Verstellung einer Höhe des Fahrzeugsitzes, insbesondere zur Verstellung der Schwingen der Höheneinstellkinematik, kann vorgesehen und beispielsweise auf einer Außenseite des Sitzrahmens angeordnet sein. Zum Beispiel kann die Antriebseinheit eine Spindelantriebseinheit sein. Die Antriebseinheit kann an einer ersten Antriebsseite mit dem Sitzrahmen schwenkbar und an einer zweiten Antriebsseite mit einem Basisteil oder der Basis einer der Viergelenkanordnungen verbunden sein. Die Antriebseinheit, beispielsweise die Spindelantriebseinheit, kann zumindest eine Getriebeeinheit, eine von der Getriebeeinheit antreibbare Spindel und einen Motor zum Antrieb der Getriebeeinheit aufweisen. Die zumindest eine Spindelantriebseinheit kann im Bereich des hinteren und/oder vorderen Schwingenpaares der Höheneinstellkinematik angeordnet sein.

Der Sitzrahmen kann zwischen einer hintersten Position und einer vordersten Position relativ zu einem Fahrzeugboden verstellt werden, was eine Längspositionierung des Fahrzeugsitzes unter gleichzeitiger Höhenänderung erlaubt. Die Ausgestaltung des jeweiligen Schwingenpaares, insbesondere von Schwingen des jeweiligen Schwingenpaares, kann dabei derart sein, dass die sich bei der Verlagerung des Sitzrahmens über die Schwingen ergebende Höhenposition den in der Regel für die jeweilige Längsposition bestehenden Bedürfnissen der Nutzer entspricht. Dabei ist es nicht zwingend erforderlich, dass die vorderste Position zwangsläufig der höchsten Position entspricht. So kann die vorderste Position auch nach Überschreiten eines durch eine Schwingenverschwenkbarkeit festgelegten Hochpunkts angeordnet sein. Die Schwingenpaare können jeweils an einem Ende mit dem Sitzrahmen und an einem anderen Ende mit einem Basisgestell und/oder einem unterhalb des Basisgestells angeordneten Längseinsteller und/oder Fahrzeugboden gelenkig verbunden sein.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: in schematischer Darstellung einen Fahrzeugsitz mit einer Längsverstelleinrichtung nach dem Stand der Technik,
- Fig. 2:: schematisch eine perspektivische Ansicht eines Sitzrahmens eines Fahrzeugsitzes,
- Fig. 3:: schematisch eine Seitenansicht eines Sitzrahmens eines Fahrzeugsitzes,
- Fig. 4:: schematisch eine perspektivische Ansicht des Sitzrahmens gemäß Figur 3,
- Fig. 5:: schematisch eine perspektivische Ansicht eines Sitzrahmens eines Fahrzeugsitzes mit einer Höheneinstellkinematik,

- Fig. 6:: schematisch eine perspektivische Ansicht einer zum Antrieb einer Höheneinstellkinematik ausgebildeten Schwinge mit einer Verriegelungsvorrichtung,
- Fig. 7:: schematisch eine perspektivische Ansicht einer zum Antrieb einer Höheneinstellkinematik ausgebildeten Schwinge ohne zusätzliche Verriegelungsvorrichtung, und
- Fig. 8:: schematisch eine perspektivische Ansicht einer Schwinge einer Höheneinstellkinematik mit einer Verriegelungsvorrichtung zum Verbinden einer Querstange.

Einander entsprechende Teile sind in allen Figuren mit den gleichen Bezugszeichen versehen.

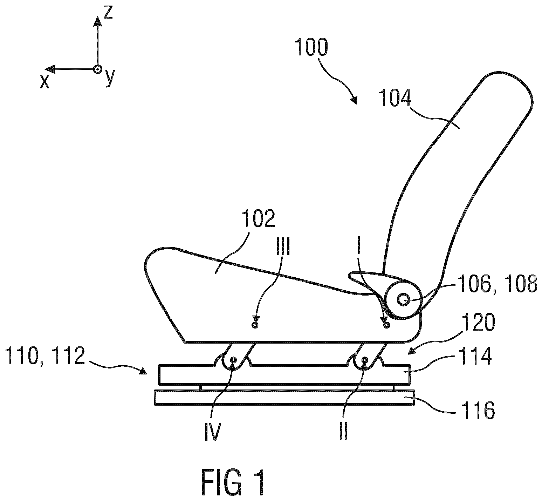

Ein in der Figur 1 zum Stand der Technik schematisch dargestellter Fahrzeugsitz 100 wird nachfolgend unter Verwendung von drei senkrecht zueinander verlaufenden Raumrichtungen beschrieben. Eine Längsrichtung x verläuft bei einem im Fahrzeug eingebauten Fahrzeugsitz 100 weitgehend horizontal und vorzugsweise parallel zu einer Fahrzeuglängsrichtung, die der gewöhnlichen Fahrtrichtung des Fahrzeugs entspricht. Eine zu der Längsrichtung x senkrecht verlaufende Querrichtung y ist im Fahrzeug ebenfalls horizontal ausgerichtet und verläuft parallel zu einer Fahrzeugquerrichtung. Eine Vertikalrichtung z verläuft senkrecht zu der Längsrichtung x und senkrecht zu der Querrichtung y. Bei einem im Fahrzeug eingebauten Fahrzeugsitz 100 verläuft die Vertikalrichtung z vorzugsweise parallel zu einer Fahrzeughochachse.

Die verwendeten Positionsangaben und Richtungsangaben, wie beispielsweise vorne, hinten, oben und unten beziehen sich auf eine Blickrichtung eines im Fahrzeugsitz 100 sitzenden Insassen in normaler Sitzposition, wobei der Fahrzeugsitz 100 im Fahrzeug eingebaut, in einer zur Personenbeförderung geeigneten Gebrauchsposition mit aufrecht stehender Rückenlehne 104 und wie üblich in Fahrtrichtung ausgerichtet ist. Der Fahrzeugsitz 100 kann jedoch auch in abweichender Ausrichtung, beispielsweise quer zur Fahrtrichtung, verbaut oder bewegt werden. Soweit nicht abweichend beschrieben, ist der Fahrzeugsitz 100 spiegelsymmetrisch zu einer senkrecht zur Querrichtung y verlaufenden Ebene aufgebaut.

Die Rückenlehne 104 kann schwenkbar an einem Sitzteil 102 des Fahrzeugsitzes 100 angeordnet sein. Hierzu kann der Fahrzeugsitz 100 optional einen Beschlag 106, insbesondere einen Einstellbeschlag, Drehbeschlag, Rastbeschlag oder Taumelbeschlag, umfassen.

Die verwendeten Positionsangaben und Richtungsangaben, wie beispielsweise radial, axial und in Umfangsrichtung, beziehen sich auf eine Drehachse 108 des Beschlags 106. Radial bedeutet senkrecht zu der Drehachse 108. Axial bedeutet in Richtung oder parallel zu der Drehachse 108.

Der Fahrzeugsitz 100 kann optional eine Längsverstelleinrichtung 110 umfassen. Die Längsverstelleinrichtung 110 umfasst beispielsweise eine Schienenanordnung 112 mit einem ersten Schienenelement 114 und einem zweiten Schienenelement 116. Das erste Schienenelement 114 ist relativ in Längsrichtung x zum zweiten Schienenelement 116 verstellbar. Das erste Schienenelement 114 ist an dem Sitzteil 102 befestigt. Das zweite Schienenelement 116 ist an einem Strukturelement eines Fahrzeugs, zum Beispiel einem Fahrzeugboden, befestigt.

Zur besseren Übersichtlichkeit wird das erste Schienenelement 114 in der nachfolgenden Beschreibung als Oberschiene 114 bezeichnet. Diese Oberschiene 114 (auch Laufschiene oder Schlitten genannt) ist dem Fahrzeugsitz 100 zugeordnet und eingerichtet, diesen Fahrzeugsitz 100 zu tragen. Das zweite Schienenelement 116 wird im Weiteren als Unterschiene 116 bezeichnet. Die Unterschiene 116 ist fest und beispielsweise mit dem Boden eines Fahrzeuges verbunden.

Des Weiteren kann zwischen dem Fahrzeugsitz 100, insbesondere zwischen dem Sitzteil 102, und der Längsverstelleinrichtung 110 und/oder einem Fahrzeugboden eine Höheneinstellkinematik 120 zumindest zur Höhenverstellung des Fahrzeugsitzes 100 angeordnet sein.

Die Höheneinstellkinematik 120 kann beidseitig des Sitzteils 102 jeweils eine Viergelenkanordnung (I, II, III, IV) aufweisen.

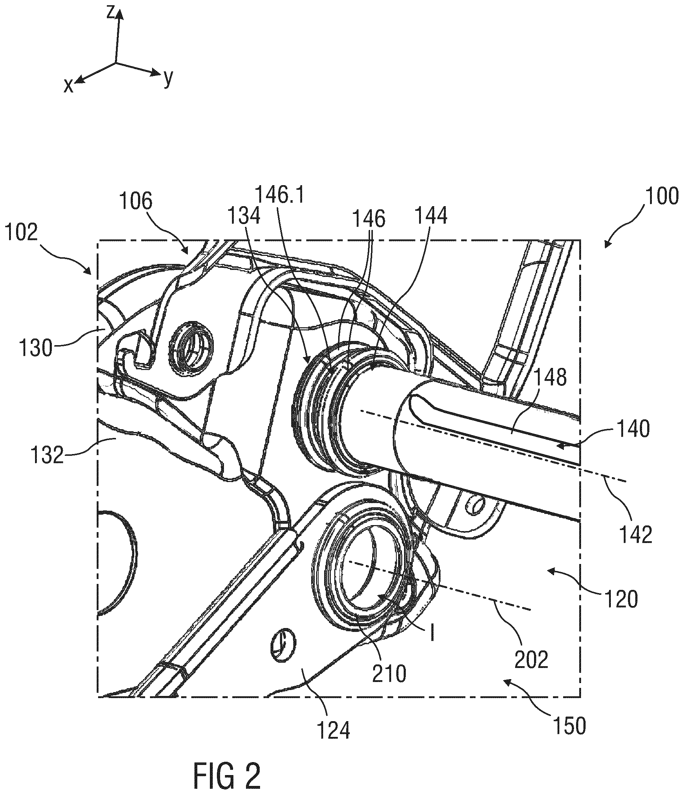

Figur 2 zeigt schematisch eine perspektivische Ansicht eines Sitzrahmens 130 eines Fahrzeugsitzes 100, insbesondere eines Sitzteils 102 des Fahrzeugsitzes 100.

Der Sitzrahmen 130 umfasst zumindest zwei in Querrichtung y zueinander beabstandet angeordneten Sitzrahmenseitenteilen 132, wobei lediglich eine Sitzseite des Fahrzeugsitzes 130 dargestellt ist.

Weiterhin umfasst der Fahrzeugsitz 100 eine Höheneinstellkinematik 120, die beidseitig jeweils über zumindest ein erstes Drehgelenk I schwenkbar am Sitzrahmen 130, insbesondere am Sitzrahmenseitenteil 132, angelenkt ist, wobei lediglich eine Sitzseite und somit ein Sitzrahmenseitenteil 132 und ein erstes Drehgelenk I dargestellt ist.

Die Sitzrahmenseitenteile 132 sind über eine in Vertikalrichtung z oberhalb der ersten Drehgelenke I angeordnete Querstange 140 miteinander verbunden. Die Querstange 140 kann beispielsweise eine Quertraverse, insbesondere ein Querrohr oder Querstab, sein.

Die Querstange 140 ist in Vertikalrichtung z zum jeweiligen Drehgelenk I beabstandet angeordnet.

Eine durch die Querstange 140 verlaufende Querstangenachse 142 und eine erste Drehachse 202 der ersten Drehgelenke I sind parallel zueinander verlaufend angeordnet. Die Querstangenachse 142 und die erste Drehachse 202 sind parallel und in Vertikalrichtung z versetzt zueinander angeordnet. Mit anderen Worten: Die Querstange 140 und die Drehachse 202 sind übereinander angeordnet.

Dadurch, dass die Querstange 140 in Bezug auf eine Position der ersten Drehgelenke I, welche die Höheneinstellkinematik 120 mit dem Sitzrahmen 130 verbinden, angehoben ist, kann ein darunter vorgesehener Aufnahmeraum 150, beispielsweise ein Fußraum und/oder ein Stauraum, vergrößert werden. Beispielsweise ist die Querstange 140 in Bezug auf die Position der ersten Drehgelenke I in einer "nach oben verschobenen" Position mit dem Sitzrahmen 130 verbunden. Eine Verbindung zwischen der Querstange 140 und der ersten Drehgelenke I kann hier das jeweilige Sitzrahmenseitenteil 132 sein.

Mittels der relativ zu der Drehachse 202 nach oben versetzt angeordneten Querstange 140, die die Sitzrahmenseitenteile 132 fest miteinander verbindet, kann ein die Drehgelenke I herkömmlicherweise tragendes Querelement entfallen. Die ersten Drehgelenke I können zur Vergrößerung des Aufnahmeraums 150 voneinander entkoppelt sein. Das heißt, dass die ersten Drehgelenke I in Querrichtung y nicht direkt miteinander verbunden werden müssen. Die voneinander entkoppelten ersten Drehgelenke I sind koaxial zueinander ausgerichtet und definieren eine gemeinsame, insbesondere gedachte, Drehachse 202. Die ersten Drehgelenke I können jeweils eine hintere Schwinge 124 der Höheneinstellkinematik 120 mit dem entsprechenden Sitzrahmenseitenteil 132 schwenkbar verbinden.

Die ersten Drehgelenke I umfassen jeweils ein Lagerelement 210 zum Führen der gegeneinander beweglichen Teile, nämlich die hintere Schwinge 124 und das Sitzrahmenseitenteil 132. Über das jeweilige Lagerelement 210 kann die hintere Schwinge 124 schwenkbar am Sitzrahmenseitenteil 132 angelenkt sein.

Insbesondere ist sind die ersten Drehgelenke I in einem hinteren Bereich des Sitzrahmens 130 angeordnet. Die Querstange 140 ist ebenfalls im hinteren Bereich des Sitzrahmens 130 angeordnet. Der Aufnahmeraum 150 ist zur Nutzung für einen hinter dem Fahrzeugsitz 100 sitzenden Insassen geeignet. Dadurch können ein Insassenkomfort und eine Fußfreiheit beziehungsweise Beinfreiheit erhöht werden.

Der Fahrzeugsitz 100, zumindest der hintere Bereich des Fahrzeugsitzes 100, kann für den hinteren Insassen gegenüber herkömmlichen Sitzen "angehoben" erscheinen.

Die Querstange 140 ist beidseitig mit jeweils einem der beiden Sitzrahmenseitenteile 132 fest verbunden. Stangenenden 144 der Querstange 140 können dem jeweiligen Sitzrahmenseitenteil 132 formschlüssig, stoffschlüssig und/oder kraftschlüssig verbunden sein. Zum Beispiel können die Stangenenden 144 am jeweiligen Sitzrahmenseitenteil 132 verschweißt sein. Das jeweilige Sitzrahmenseitenteil 132 kann optional zusätzlich oder alternativ eine Ausnehmung 134 zur kraftschlüssigen Aufnahme eines Stangenendes 144 aufweisen.

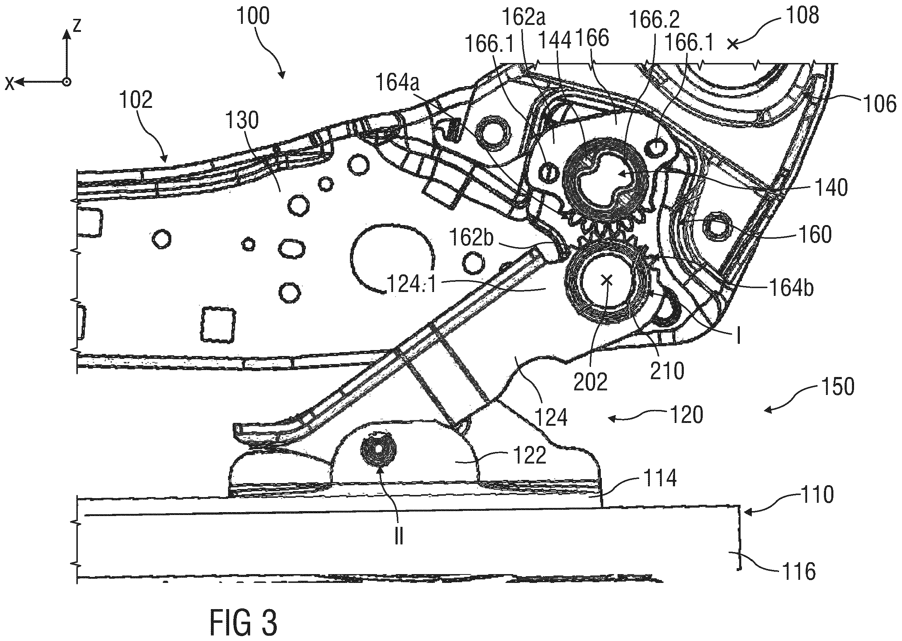

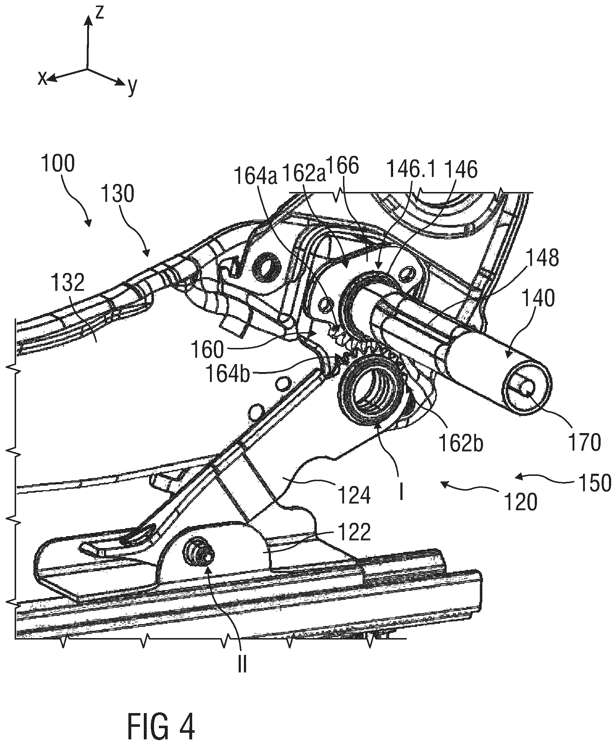

Die Querstange 140 kann zur Erhöhung ihrer Steifigkeit eine Mehrzahl von Verstärkungsrippen 146 und/oder Verstärkungsnuten 148 zur Ausprägung einer Stangenform aufweisen. Zum Beispiel kann zumindest ein Stangenende 144 der Querstange 140 zwei axial zueinander beabstandeten Verstärkungsrippen 146, beispielsweise in Form von nach außen abstehenden Wulsten oder Ausbuchtungen, aufweisen. Gemäß einem in Figuren 3 und 4 gezeigten Ausführungsbeispiel kann zwischen den beiden Verstärkungsrippen 146 eine die Querstange 140 umlaufende Aussparung 146.1 zur Aufnahme eines Verriegelungselements 162a ausgebildet sein.

Figur 3 zeigt schematisch eine Seitenansicht eines Sitzrahmens 130 eines Fahrzeugsitzes 100.

Um eine torsionssteife Verbindung zwischen der Querstange 140 und zumindest einem der beiden ersten Drehgelenke I bereitzustellen, umfasst die Höheneinstellkinematik 120 zumindest eine Verriegelungsvorrichtung 160. Die zumindest eine Verriegelungsvorrichtung 160 ist zumindest an einem der beiden Sitzrahmenseitenteile 132 (in Figur 2 dargestellt) angeordnet und ausgebildet, die Querstange 140 zumindest einseitig, das heißt zumindest eines der beiden Stangenenden 144, mit einem der beiden ersten Drehgelenke I des entsprechenden Sitzrahmenseitenteils 132 torsionssteif zu verbinden.

Die Verriegelungsvorrichtung 160 umfasst zumindest zwei in Eingriff bringbare oder gebrachte Verriegelungselemente 162a, 162b. Ein erstes Verriegelungselement 162a ist mit der Querstange 140, insbesondere mit einem Stangenende 144, verbunden. Ein zweites Verriegelungselement 162b ist mit dem ersten Drehgelenk I verbunden.

Die Verriegelungselemente 162a, 162b können in Verzahnung bringbare oder gebrachte Zahnsegmente 164a, 164b aufweisen.

Zum Beispiel kann das erste Verriegelungselement 162a ein Halteelement 166 umfassen, welches an dem entsprechenden Sitzrahmenseitenteil 132 fixiert sein kann. Das Halteelement 166 kann eine Anzahl von Fixierungselementen 166.1, beispielsweise Fixierungslöcher, aufweisen. Über passende nicht näher dargestellte Fixierelemente, beispielsweise Schraubelemente, kann das Halteelement 166 an dem Sitzrahmenseitenteil 132 fixiert, beispielsweise verschraubt, werden. Das Halteelement 166 kann eine Öffnung 166.2 zur Aufnahme eines Stangenendes 144 der Querstange 140 aufweisen. Das Stangenende 144 kann in der Öffnung 166.2 zumindest formschlüssig angeordnet sein und mit dem ersten Verriegelungselement 162a eine am Sitzrahmenseitenteil 132 fixierte Einheit bilden. An einer Unterseite des Halteelements 166 kann das zugehörige Zahnsegment 164a angeordnet sein. Das Halteelement 166 kann beispielsweise eine Halteplatte oder ein Halteblech mit einem Zahnsegment 164a sein. Alternativ kann das Halteelement 166 bogenförmig, beispielsweise U-förmig, oder andersförmig ausgebildet sein. Das Halteelement 166 kann stoffschlüssig und/oder kraftschlüssig mit dem Stangenende 144 verbunden sein.

Alternativ kann das erste Verriegelungselement 162a und die Querstange 140 einteilig ausgebildet sein. Beispielsweise kann ein Stangenende 144 der Querstange 140 zu einer Platte gepresst und anschließend mit einem Zahnsegment 164a versehen werden. Die Querstange 140, insbesondere zumindest eines der Stangenenden 144, kann an einer Unterseite ein Zahnsegment 164a aufweisen.

Zum Beispiel kann das zweite Verriegelungselement 162b und hintere Schwinge 124 einteilig ausgebildet sein. Beispielsweise kann ein Schwingenende 124.1 der hinteren Schwinge 124 mit einem Zahnsegment 164b versehen sein. Ein Schwingenende 124.1 kann eine Verzahnung aufweisen. Die hintere Schwinge 124, insbesondere zumindest eines der Schwingenenden 124.1, kann an einer Oberseite das Zahnsegment 164b aufweisen.

Alternativ kann das zweite Verriegelungselement 162b ein Zusatzteil sein, welches an der hinteren Schwinge 124, insbesondere an dem gewünschten Schwingenende 124.1, fixiert sein kann. Das zweite Verriegelungselement 162b kann beispielsweise eine zu dem Schwingenende 124.1 korrespondierende Form und/oder Aussparung aufweisen. Das zweite Verriegelungselement 162b kann beispielsweise im Wesentlichen bogenförmig, beispielsweise U-förmig, oder andersförmig ausgebildet sein. Das zweite Verriegelungselement 162b kann an einer Oberseite mit dem Zahnsegment 164b versehen und an einer Unterseite mit dem Schwingenende 124.1 verbunden sein. Das zweite Verriegelungselement 162b kann mit dem Schwingenende 124.1 zumindest stoffschlüssig verbunden sein.

Bei einer Verstellung der Höheneinstellkinematik 120, beispielsweise der Viergelenkanordnung (I, II, III, IV) können die Verriegelungselemente 162a, 162b über die Zahnsegmente 164a, 164b relativ zueinander verstellt werden.

Dadurch, dass eine zusätzliche Verriegelungsvorrichtung 160 vorgesehen ist, kann eine torsionssteife Verbindung zwischen der Querstange 140 und dem ersten Drehgelenk I zur Erhöhung einer Insassensicherheit im Crashfall bereitgestellt werden.

Die hintere Schwinge 124 kann an einer Basis 122 der Höheneinstellkinematik 120 schwenkbar angelenkt sein. Die hinter Schwinge 124 kann über ein zweites Drehgelenk II mit der Basis 122 schwenkbar verbunden sein.

Die Basis 122 kann eine Basishalterung sein, die beispielsweise mit einem Fahrzeugboden oder wie dargestellt mit einem ersten Schienenelement 114, beispielsweise einer Oberschiene, einer Längsverstelleinrichtung 110 verbunden sein kann.

Figur 4 zeigt schematisch eine perspektivische Ansicht des Sitzrahmens 130 gemäß Figur 3.

Die Querstange 140 kann ein Querrohr sein. In einem Hohlraum der Querstange 140 kann ein Federelement 170 zur Federverspannung der Sitzrahmenseitenteile 132 angeordnet sein. Die Verstärkungsnuten 148 können beispielsweise derart in den Hohlraum hineinragen, dass das Federelement 170, beispielsweise ein Federstab, im Hohlraum durch eine Innenfläche der Verstärkungsnuten 148 gehalten wird.

Das erste Verriegelungselement 162a, insbesondere das Halteelement 166, kann zwischen zwei Verstärkungsrippen 146 an einem Stangenende 144 angeordnet, insbesondere verspannt und/oder verklemmt, sein.

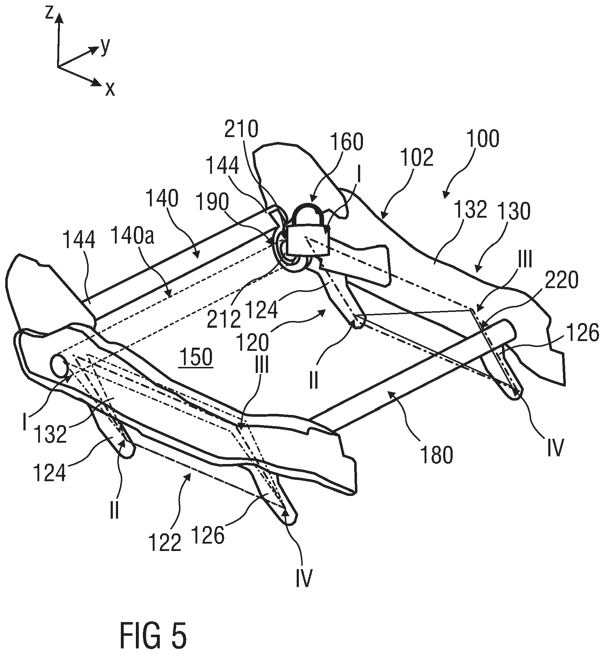

Figur 5 zeigt schematisch eine perspektivische Ansicht eines Sitzrahmens 130 eines Fahrzeugsitzes 100 mit einer Höheneinstellkinematik 120.

Die Höheneinstellkinematik 120 kann beidseitig des Sitzteils 102 jeweils eine Viergelenkanordnung (I, II, III, IV) aufweisen.

Jede der beiden Viergelenkanordnungen (I, II, III, IV) umfasst jeweils eine Basis 122, ein Sitzrahmenseitenteil 132, eine vordere Schwinge 126 und eine hintere Schwinge 124 als Getriebeglieder.

Die hintere Schwinge 124 ist über das erste Drehgelenk I schwenkbar an dem Sitzrahmenseitenteil 132 und über ein zweites Drehgelenk II schwenkbar an der Basis 122 angelenkt.

Die vordere Schwinge 126 ist über ein drittes Drehgelenk III schwenkbar an dem Sitzrahmenseitenteil 132 und über ein viertes Drehgelenk IV schwenkbar an der Basis 122 angelenkt.

Herkömmlicherweise weist ein Höhenverstellsystem hintere Schwingen 124 auf, die über eine gemeinsame Querstange 140a an beiden Sitzrahmenseitenteilen 132 angelenkt sind. Ein Fußraum, insbesondere Aufnahmeraum 150, für einen hinter dem Fahrzeugsitz 100 sitzenden Insassen, beispielsweise einen Fondpassagier, ist dadurch durch die hintere Querstange 140 begrenzt.

Dadurch, dass die Querstange 140, insbesondere eine hintere Querstange 140, des erfindungsgemäßen Fahrzeugsitzes 100 in Bezug auf eine Position der hinteren ersten Drehgelenke I, welche die Höheneinstellkinematik 120 mit dem Sitzrahmen 130 verbinden, angehoben ist, kann ein darunter vorgesehener Aufnahmeraum 150 vergrößert werden.

Um eine torsionssteife Verbindung zwischen der Querstange 140 und zumindest einem der beiden ersten Drehgelenke I bereitzustellen, umfasst die Höheneinstellkinematik 120 zumindest eine Verriegelungsvorrichtung 160. Die zumindest eine Verriegelungsvorrichtung 160 ist an einem der beiden Sitzrahmenseitenteile 132 angeordnet und ausgebildet, die Querstange 140 zumindest einseitig, das heißt zumindest eines der beiden Stangenenden 144, mit einem der beiden ersten Drehgelenke I des entsprechenden Sitzrahmenseitenteils 132 torsionssteif zu verbinden.

Bei Verriegelung der zumindest einen hinteren Schwinge 124 einer der Viergelenkanordnungen (I, II, III, IV) durch die an der hinteren Schwinge 124 vorgesehene Verriegelungsvorrichtung 160 können die anderen Getriebeglieder, das heißt das entsprechende Sitzrahmenseitenteil 132, die entsprechende Basis 122 und die entsprechende vordere Schwinge 126 gemäß einem schematisch dargestellten Dreieck 220 versteift werden. Dadurch kann die entsprechende Viergelenkanordnung (I, II, III, IV) mittels einer Verriegelungsvorrichtung 160 torsionssteif verriegelt werden.

Auf der gegenüberliegenden Sitzseite ist beispielhaft eine nicht verriegelbare oder verriegelte Viergelenkanordnung (I, II, III, IV) gezeigt, wobei die Getriebeglieder dieser Viergelenkanordnung (I, II, III, IV) zumindest in Querrichtung y in einem Crashfall stark schwankend sein können.

Daher kann auf beiden Sitzseiten jeweils eine Verriegelungsvorrichtung 160 vorgesehen sein.

Eine vordere Querstange 180 kann vorgesehen sein, die Sitzrahmenseitenteile 132 in einem vorderen Bereich des Fahrzeugsitzes 100 zu verbinden. Auch die vordere

Querstange 180 kann gegenüber den entsprechenden dritten Drehgelenken III in einer erhöhten Position angeordnet sein und/oder über zumindest eine Verriegelungsvorrichtung 160 mit zumindest eine der vorderen Schwingen 126 verriegelbar sein.

Zur Erhöhung einer Verbindungskraft zwischen der Querstange 140 und der entsprechenden hinteren Schwinge 124 kann zusätzlich ein Federelement 190 vorgesehen und ausgebildet sein, die Querstange 140 und eines der beiden ersten Drehgelenke I zueinander zu verspannen. Das Federelement 190 kann beispielsweise im Bereich des ersten Drehgelenks I, beispielsweise im Bereich des zugehörigen Lagerelements 210, angeordnet sein. Das Lagerelement 210 kann beispielsweise einen abstehenden Lagerbolzen 212 aufweisen, wobei das Federelement 190 am Lagerbolzen 212 angeordnet sein kann. Zum Beispiel kann das Federelement 190 eine Spiralfeder sein. Ein Ende des Federelements 190 kann am Lagerelement 210 und/oder am Lagerbolzen 212 fixiert sein. Ein anderes Ende des Federelements 190 kann mit der Querstange 140 verbunden sein.

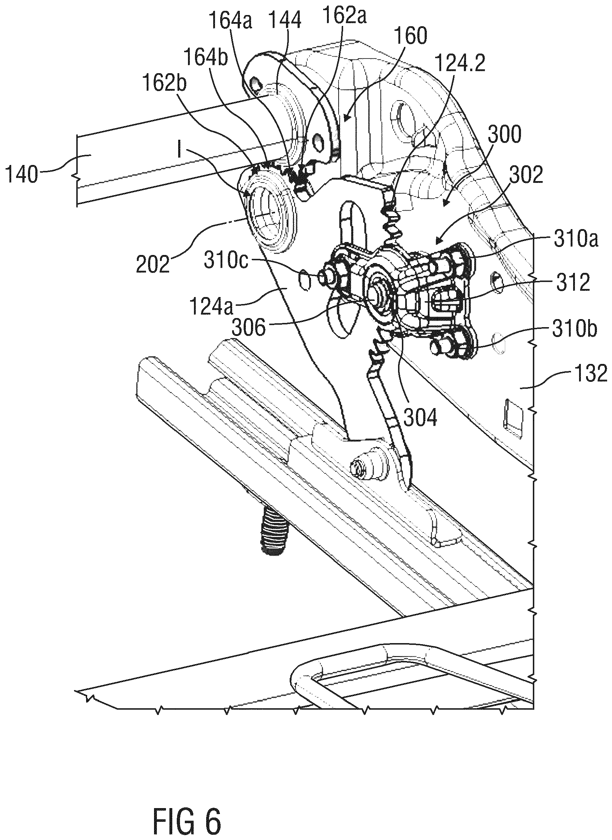

Figur 6 zeigt schematisch eine perspektivische Ansicht einer zum Antrieb einer Höheneinstellkinematik 120 ausgebildeten Schwinge 124a mit einer Antriebsvorrichtung 300 und einer Verriegelungsvorrichtung 160.

Der Fahrzeugsitz 100 kann eine eine Antriebsvorrichtung 300 aufweisende Einstellkinematik, vorliegend einer Höheneinstellkinematik 120, umfassen. Der Fahrzeugsitz 100 weist ein Sitzteil 102 und eine Rückenlehne 104 auf, wobei das Sitzteil 102 einen Sitzrahmen 130 umfasst. Der Sitzrahmen 130 weist zwei gegenüberliegende Sitzrahmenseitenteile 132 auf.

An zumindest einem der Sitzrahmenseitenteile 132 kann eine Antriebsvorrichtung 300 angeordnet sein. Die Antriebsvorrichtung 300 kann beispielsweise als ein Schrittschaltgetriebe mit beispielsweise einem Hebel ausgebildet sein. Die Antriebsvorrichtung 300 kann als eine Getriebemotor-Vorrichtung ausgestaltet sein.

Das Sitzrahmenseitenteil 132 kann mit einer Antriebseinheit 302, beispielsweise in Form eines Getriebemotors und/oder Elektromotors, versehen sein.

Die Antriebsvorrichtung 300 kann zumindest einen mit der Antriebseinheit 302 antreibbaren Ritzel 304 umfassen. Abtriebsseitig kann die Antriebsvorrichtung 300 ein an einer Antriebswelle 306 angeordnetes Ritzel 304 aufweisen, welches um eine Achse des Ritzels 304 rotierbar ist. Die Antriebsvorrichtung 300 kann eine nicht näher dargestellte Grundplatte aufweisen, mittels welcher die Antriebsvorrichtung 300 an dem Sitzrahmenseitenteil 132 befestigbar ist.

Die hintere Schwinge 124a kann zumindest ein Zahnsegment 124.2 aufweisen, welches vorliegend integral mit der hinteren Schwinge 124a ausgestaltet ist. Das Zahnsegment 124.2 kann alternativ ebenfalls zweiteilig mit der hinteren Schwinge 124a ausgestaltet sein.

Die hintere Schwinge 124a ist um eine erste Drehachse 202 drehbar am Sitzrahmenseitenteil 132 gelagert. Die hintere Schwinge 124a ist gegenüber herkömmlichen Ausgestaltungen von der Querstange 140 entkoppelt.

Das Ritzel 304 der Antriebsvorrichtung 300 kann mit dem Zahnsegment 124.2 der hinteren Schwinge 124a in Eingriff sein. Ferner kann die Antriebsvorrichtung 300 drei Gewindebolzen 310a, 310b, 310c aufweisen. Auf die freien Enden der Gewindebolzen 310a, 310b, 310c sowie der Antriebswelle 306 kann eine Brücke 312 aufgeschoben sein. Die Brücke 312 kann mittels auf den Gewindebolzen 310a, 310b, 310c aufgeschraubten Muttern gesichert sein. Das Ritzel 304 und das Zahnsegment 124.2 können mittels der Brücke 312 an dem Sitzrahmenseitenteil 132 gesichert werden.

Im dargestellten Ausführungsbeispiel kann die Querstange 140 beidseitig an dem jeweiligen Sitzrahmenseitenteil 132 drehbar gelagert sein, wobei vorliegend nur eine Sitzseite gezeigt ist. Eine gegenüberliegende Sitzseite kann gemäß den Darstellungen nach Figuren 2 bis 4 ausgebildet sein.

Um eine torsionssteife Verbindung zwischen der Querstange 140 und der zugehörigen, antreibbaren, hinteren Schwinge 124a sicherzustellen, ist eine Verriegelungsvorrichtung 160 vorgesehen, die die Querstange 140 und die Schwinge 124a tunnelseitig durch eine Verzahnung verbindet. Auf der gegenüberliegenden Sitzseite kann zur Sicherstellung der torsionssteifen Verbindung zwischen der Querstange 140 und der zugehörigen hinteren Schwinge 124, 124a ebenfalls eine Verriegelungsvorrichtung 160 vorgesehen sein, beispielsweise gemäß den Darstellungen nach Figuren 3 und 4.

Die Verriegelungsvorrichtung 160 umfasst zumindest zwei in Eingriff bringbare oder gebrachte Verriegelungselemente 162a, 162b. Ein erstes Verriegelungselement 162a ist mit der Querstange 140, insbesondere mit einem Stangenende 144, verbunden. Ein zweites Verriegelungselement 162b kann an der hinteren Schwinge 124a integral ausgebildet sein. Die Verriegelungselemente 162a, 162b können in Verzahnung bringbare oder gebrachte Zahnsegmente 164a, 164b aufweisen.

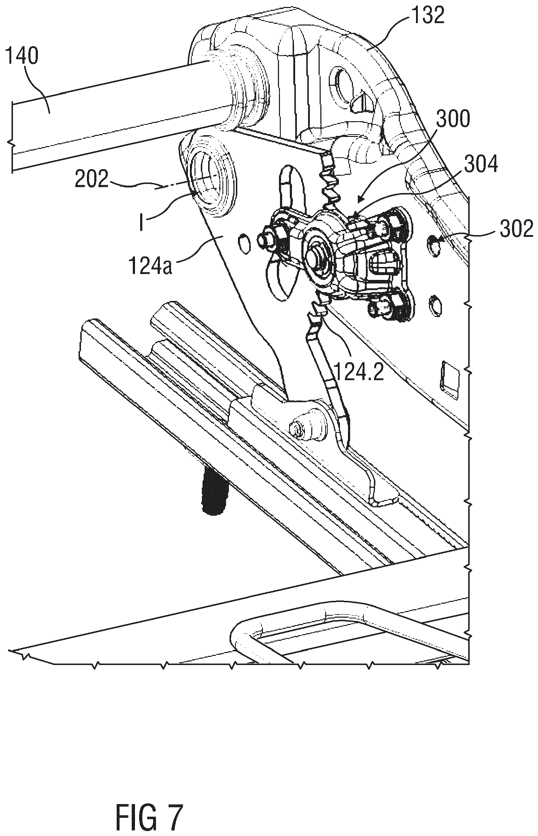

Figur 7 zeigt schematisch eine perspektivische Ansicht einer zum Antrieb einer Höheneinstellkinematik 120 ausgebildeten Schwinge 124a ohne Verriegelungsvorrichtung 160.

Im dargestellten Ausführungsbeispiel kann die Querstange 140 beidseitig mit dem jeweiligen Sitzrahmenseitenteil 132 fest, das heißt nicht drehbar, verbunden sein, wobei vorliegend nur eine Sitzseite gezeigt ist. Eine gegenüberliegende Sitzseite kann gemäß den Darstellungen nach Figuren 2 bis 4 ausgebildet sein.

Die torsionssteife Verbindung zwischen der Querstange 140 und der zugehörigen antreibbaren hinteren Schwinge 124a kann schwellerseitig beziehungsweise antriebsseitig durch die Verzahnung der Antriebsvorrichtung 300 mit der hinteren Schwinge 124a sichergestellt werden. Mit anderen Worten: Die torsionssteife Verbindung zwischen der Querstange 140 und der antreibbaren hinteren Schwinge 124a wird schwellerseitig durch die Verzahnung zwischen der Schwinge 124a und einem Höheneinstellmotor, beispielsweise der Antriebseinheit 302 über das Ritzel 304, sichergestellt.

Auf der gegenüberliegenden Sitzseite kann zur Sicherstellung der torsionssteifen Verbindung zwischen der Querstange 140 und der zugehörigen hinteren Schwinge 124 eine Verriegelungsvorrichtung 160 vorgesehen sein, beispielsweise gemäß den Darstellungen nach Figuren 3 und 4.

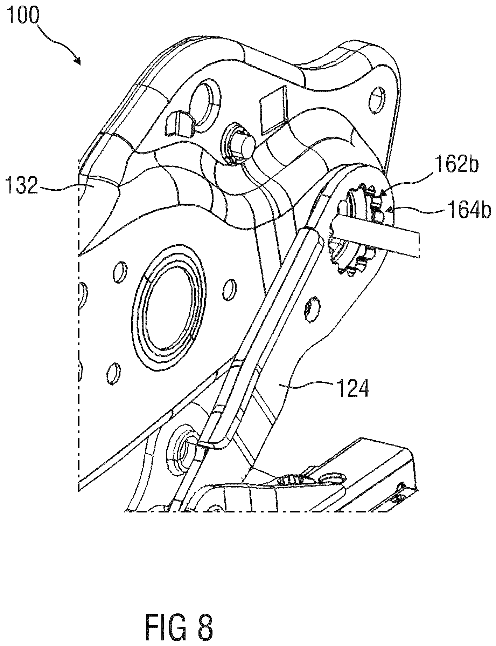

Figur 8 zeigt schematisch eine perspektivische Ansicht einer Schwinge 124 einer Höheneinstellkinematik 120 mit einer Verriegelungsvorrichtung 160 zum formschlüssigen und torsionssteifen Verbinden einer hier ausgeblendeten Querstange 140, 140a.

Eine zum Antrieb einer Höheneinstellkinematik 120 ausgebildete gegenüberliegende Schwinge 124a kann ebenfalls mit einer Verriegelungsvorrichtung 160 versehen sein.

Die Schwinge 124, 124a umfasst beispielsweise eine Verzahnungsgeometrie zur Verbindung mit der Querstange 140, 140a. Die Querstange 140, 140a kann eine komplementäre Verzahnungsgeometrie aufweisen. Die Schwinge 124, 124a kann eine Öffnung aufweisen mit einem innenliegenden, beispielsweise innenumfangsseitigen, Verriegelungselement 162b und einem Zahnsegment 164b. Die Querstange 140, 140a kann ein außenliegendes, beispielsweise außenumfangsseitiges, Verriegelungselement 162a und ein Zahnsegment 164a aufweisen.

Zwischen dem Verriegelungselement 162b der Schwinge 124, 124a und der Querstange 140, 140a besteht eine formschlüssige (torsionssteife) Verbindung.

Im dargestellten Ausführungsbeispiel ist die Querstange 140, 140a ausgeblendet. Die formschlüssige Verbindung entsteht durch die Montage zwischen Verriegelungselement 162b und Querstange 140, 140a.

Die Querstange 140, 140a kann beidseitig drehbar gelagert sein mit den Kissenrahmen-Seitenteilen. Die torsionssteife Verbindung zwischen den beiden hinteren Schwingen 124, 124a kann durch die Querstange 140, 140a realisiert werden, beispielsweise durch einen so genannten Tube-Flaring-Prozess. Beispielsweise wird die torsionssteife Verbindung durch Tulpen der Querstange 140, 140a in Verbindung mit der Verzahnungsgeometrie beider Schwingen 124, 124a zur Querstange 140, 140a realisiert.

Eine zusätzliche Verzahnung zwischen der Querstange 140, 140a, insbesondere dem Verriegelungselement 162a, und der jeweiligen Schwinge 124, 124a kann durch die Verzahnungsgeometrie realisiert werden.

Die in der vorstehenden Beschreibung, den Ansprüchen und den Zeichnungen offenbarten Merkmale können sowohl einzeln als auch in Kombination für die Verwirklichung der Erfindung in ihren verschiedenen Ausgestaltungen von Bedeutung sein.

### Bezugszeichenliste

- 100: Fahrzeugsitz
- 102: Sitzteil
- 104: Rückenlehne
- 106: Beschlag
- 108: Drehachse
- 110: Längsverstelleinrichtung
- 112: Schienenanordnung
- 114: Erstes Schienenelement (Oberschiene)
- 116: Zweites Schienenelement (Unterschiene)
- 120: Höheneinstellkinematik
- 122: Basis
- 124, 124a: hintere Schwinge
- 124.1: Schwingenende
- 124.2: Zahnsegment
- 126: vordere Schwinge
- 130: Sitzrahmen
- 132: Sitzrahmenseitenteil
- 134: Ausnehmung
- 140, 140a: Querstange, insbesondere hintere Querstange
- 142: Querstangenachse
- 144: Stangenende
- 146: Verstärkungsrippe
- 146.1: Aussparung
- 148: Verstärkungsnut
- 150: Aufnahmeraum
- 160: Verriegelungsvorrichtung
- 162a, 162b: Verriegelungselement
- 164a, 164b: Zahnsegment
- 166: Halteelement
- 166.1: Fixierungselement
- 166.2: Öffnung
- 170: Federelement
- 180: Querstange, insbesondere vordere Querstange
- 190: Federelement
- 202: erste Drehachse
- 210: Lagerelement
- 212: Lagerbolzen
- 220: Dreieck
- 300: Antriebsvorrichtung
- 302: Antriebseinheit
- 304: Ritzel
- 306: Antriebswelle
- 310a, 310b, 310c: Gewindebolzen
- 312: Brücke
- I, II, III, IV: Drehgelenk
- (I, II, III, IV): Viergelenkanordnung
- x: Längsrichtung
- y: Querrichtung
- z: Vertikalrichtung

## Patentansprüche

1. Fahrzeugsitz (100), umfassend zumindest
- einen Sitzrahmen (130) mit zumindest zwei in Querrichtung (y) zueinander beabstandet angeordneten Sitzrahmenseitenteilen (132), und
- eine Höheneinstellkinematik (120), die beidseitig jeweils über zumindest ein erstes Drehgelenk (I) schwenkbar am Sitzrahmen (130) angelenkt ist, **dadurch gekennzeichnet, dass** die Sitzrahmenseitenteile (132) über eine in Vertikalrichtung (z) oberhalb der ersten Drehgelenke (I) angeordnete Querstange (140) miteinander verbunden sind.

2. Fahrzeugsitz (100) nach Anspruch 1,
**dadurch gekennzeichnet, dass** eine durch die Querstange (140) verlaufende Querstangenachse (142) und eine erste Drehachse (202) der ersten Drehgelenke (I) parallel zueinander verlaufend angeordnet sind.

3. Fahrzeugsitz (100) nach Anspruch 1 oder 2,
**dadurch gekennzeichnet, dass** die Querstange (140) beidseitig mit jeweils einem der beiden Sitzrahmenseitenteile (132) fest verbunden ist.

4. Fahrzeugsitz (100) nach einem der Ansprüche 1 bis 3,
**dadurch gekennzeichnet, dass** zumindest eine Verriegelungsvorrichtung (160) an einem der beiden Sitzrahmenseitenteile (132) angeordnet und ausgebildet ist, die Querstange (140) zumindest einseitig mit einem der beiden ersten Drehgelenke (I) des entsprechenden Sitzrahmenseitenteils (132) torsionssteif zu verbinden.

5. Fahrzeugsitz (100) nach Anspruch 4,
**dadurch gekennzeichnet, dass** die Verriegelungsvorrichtung (160) zumindest zwei in Eingriff bringbare oder gebrachte Verriegelungselemente (162a, 162b) aufweist, wobei ein erstes Verriegelungselement (162a) mit der Querstange (140) verbunden ist und ein zweites Verriegelungselement (162b) mit dem ersten Drehgelenk (I) verbunden ist.

6. Fahrzeugsitz (100) nach Anspruch 5,
**dadurch gekennzeichnet, dass** die Verriegelungselemente (162a, 162b) als in Verzahnung bringbare oder gebrachte Zahnsegmente (164a, 164b) ausgebildet sind.

7. Fahrzeugsitz (100) nach Anspruch 5 oder 6,
**dadurch gekennzeichnet, dass**
- das erste Verriegelungselement (162a) an einem unterseitigen Stangensegment der Querstange (140) angeordnet ist und
- das zweite Verriegelungselement (162b) an einem oberseitigen Gelenksegment des ersten Drehgelenks (I) und/oder an einem oberseitigen Schwingensegment einer hinteren Schwinge (124) der Höheneinstellkinematik (120) angeordnet ist.

8. Fahrzeugsitz (100) nach einem der Ansprüche 1 bis 7,
**dadurch gekennzeichnet, dass** die Höheneinstellkinematik (120) beidseitig des Sitzrahmens (130) jeweils eine Viergelenkanordnung (I, II, III, IV) aufweist, wobei jede der beiden Viergelenkanordnungen (I, II, III, IV) jeweils eine Basis (122), ein Sitzrahmenseitenteil (132), eine vordere Schwinge (126) und eine hintere Schwinge (124) als Getriebeglieder umfasst.

9. Fahrzeugsitz (100) nach Anspruch 8,
**dadurch gekennzeichnet, dass**
- die hintere Schwinge (124) über das erste Drehgelenk (I) schwenkbar an dem Sitzrahmenseitenteil (132) und über ein zweites Drehgelenk (II) schwenkbar an der Basis (122) angelenkt ist,
- die vordere Schwinge (126) über ein drittes Drehgelenk (III) schwenkbar an dem Sitzrahmenseitenteil (132) und über ein viertes Drehgelenk (IV) schwenkbar an der Basis (122) angelenkt ist.

10. Fahrzeugsitz (100) nach einem der Ansprüche 1 bis 9,
**dadurch gekennzeichnet, dass** ein Federelement (190) vorgesehen und
ausgebildet ist, die Querstange (140) und eines der beiden ersten Drehgelenke (I) zueinander zu verspannen.
